# EUROPÄISCHE PATENTANMELDUNG

(11) **EP 0 937 537 A1**
(43) Veröffentlichungstag der Anmeldung: **25.08.1999**
(21) Anmeldenummer: 99103090.9
(22) Anmeldetag: 17.02.1999
(51) Int. Cl.: B23Q 1/00

(54) **Schnellspannzylinder zum Einziehen und Zentrieren eines Einzugsnippels**

(30) Priorität: 19.02.1998 DE 19806961
(71) Anmelder: Stark, Emil, jr., A-6840 Götzis (AT)
(72) Erfinder: Stark, Emil, 6840 Götzis (AT)
(74) Vertreter: Riebling, Peter, Dr.-Ing.

(57) **Zusammenfassung**

Schnellspannzylinder zum Einziehen und Zentrieren eines Einzugsnippels (4), wobei in dem Schnellspannzylinder (2) ein Kolben (9) verschieblich gelagert ist, der zum Einziehen mit Federkraft und zum Lösen mit einer Druckflüssigkeit beaufschlagbar ist, wobei die Zuführung der Druckflüssigkeit durch das Befestigungsmittel des Schnellspannzylinders (2) erfolgt.

## Beschreibung

Die vorliegende Erfindung beschäftigt sich mit einem Schnellspannzylinder nach dem Oberbegriff des Anspruchs 1.

Ein derartiger Schnellspannzylinder ist beispielsweise mit der auf denselben Anmelder zurückgehenden DE 41 35 418 bekannt geworden.

Zu Einzelheiten hinsichtlich des genauen konstruktiven Aufbaues und der Wirkungsweise wird auf diese Offenlegungsschrift verwiesen, deren Offenbarung in vollem Umfang von der vorliegenden Anmeldung umfaßt sein soll.

In dieser älteren Anmeldung sowie in der hier vorliegenden Anmeldung ist der Schnellspannzylinder mit einem verschieblich gelagerten Kolben versehen. Zum Einziehen und Zentrieren eines Einzugsnippels wird der Kolben mit einer Federkraft beaufschlagt. Der Kolben wird verschoben, der Einzugsnippel ergriffen, eingezogen und zentriert. Zum Lösen wird der Kolben mit einer Druckflüssigkeit beaufschlagt, die eine Verschiebung in Gegenrichtung bewirkt.

Bei der bekannten Ausführungsform erfolgt die Zufuhr dieser Druckflüssigkeit über einen Anschluß, der an einer Seitenwand des Schnellspannzylinders befestigt ist. Zum Einbringen der Druckflüssigkeit müssen dann mehrere, im wesentlichen senkrecht zueinander stehende Bohrungen vorgesehen werden. Das Anbringen sowie das Verschließen verschiedener Austrittsöffnungen dieser Bohrungen ist zeit- und kostenaufwendig.

Aufgabe der vorliegenden Erfindung ist es daher, einen Schnellspannzylinder der eingangs genannten Art dahin weiterzubilden, daß er einfacher und kostengünstiger gefertigt werden kann.

Erfindungsgemäß wird diese Aufgabe durch die technische Lehre des Anspruchs 1 gelöst.

Wesentlich hierbei ist, daß die Zuführung der Druckflüssigkeit durch das Befestigungsmittel des Spannzylinders erfolgt.

Dieses Befestigungsmittel kann als von dem Schnellspannzylinder getrenntes Bauteil oder materialeinstückig mit dem Schnellspannzylinder ausgebildet sein. Es liegt unmittelbar über einem Tisch, auf dem der Schnellspannzylinder befestigt wird. Somit ist es nicht mehr erforderlich, mehrere zueinander im Winkel stehende Bohrungen vorzusehen, sondern es ist in dem Schnellspannzylinder nur noch eine Bohrung erforderlich. Die Herstellungskosten sinken, da weniger Bohrungen vorgesehen werden müssen.

In der ersten genannten Ausführungsform ist das Befestigungsmittel als von dem Schnellspannzylinder getrenntes Bauteil ausgebildet. Es bietet sich an, hierfür ansich bekannte Briden zu verwenden, die von oben her über den Schnellspannzylinder gesetzt werden und sich an einem geeigneten Anschlag anliegt. Um eine zuverlässige Zuführung der Druckflüssigkeit unabhängig von der gegenseitigen Winkellage zwischen Schnellspannzylinder und Befestigungsmittel bereitzustellen, ist in einer Weiterbildung der Schnellspannzylinder an seiner Außenseite mit einer umlaufenden Ringnut versehen. Alternativ oder zusätzlich kann das Befestigungsmittel entsprechend an seiner Innenseite mit einer umlaufenden Ringnut versehen sein. Die Ringnut in dem Befestigungsmittel weist bevorzugt eine derartige Tiefe auf, daß sie ohne zusätzliche Bearbeitung mit einer Bohrung zur Aufnahme eines Anschlusses für die Zufuhr der Druckflüssigkeit in Verbindung steht. Hierdurch kann ein Bearbeitungsschritt eingespart werden. Selbstverständlich können die Ringnuten über geeignete Dichtungen abgedichtet sein.

Zum Einbringen der Druckflüssigkeit in den Druckraum des Schnellspannzylinders sind eine oder mehrere Verbindungsbohrungen vorgesehen, die in eine umlaufende Ringnut an der Innenseite des Schnellspannzylinders münden. Je nach der Ausgestaltung kann diese Verbindungsbohrung zweigeteilt sein, wobei eine erste Bohrung in dem Schnellspannzylinder und eine zweite Bohrung in dem Befestigungsmittel vorgesehen ist. Diese beiden Bohrungen können einen stumpfen Winkel einschließen.

Selbstverständlich kann allerdings bei einer anderen Ausgestaltung auch nur eine einzige Verbindungsbohrung vorgesehen sein, die dann bevorzugt vollständig in den Schnellspannzylinder angeordnet ist.

Der genannte Anschlag kann in Form eines Rings ausgeführt sein, der eine entsprechende Nut am Schnellspannzylinder eingesetzt werden. Alternativ kann der Schnellspannzylinder auch mit einem geeigneten Ansatz versehen sein.

In einer bevorzugten zweiten Ausführungsform ist das Befestigungsmittel materialeinstückig mit dem Schnellspannzylinder ausgebildet, z. B. in Form eines umlaufenden Ringflansches. In diesem Ringflansch ist direkt der Anschluß für die Zuführung der Druckflüssigkeit vorgesehen, der über eine Verbindungsbohrung mit der bereits genannten Ringnut an der Innenseite des Schnellspannzylinders in Verbindung steht. In beiden Ausführungsformen wird durch diese Ringnut eine gute Verteilung der Druckflüssigkeit über den gesamten Umfang des Schnellspannzylinders erreicht.

Zur Befestigung des Schnellspannzylinders an einem Tisch kann das Befestigungsmittel mit kreisbogenförmigen Ausnehmungen oder Einstichen versehen sein.

Der Schnellspannzylinder ist an seiner Oberseite mit einem Deckel abgedeckt. Auch hier gibt es zwei mögliche Ausführungsformen. In einer ersten Ausführungsform ist vorgesehen, daß der Deckel außenseitig von einem Flansch umgeben ist, der leicht über den Deckel vorsteht. Dieser Flansch ist ein Teil des Schnellspannzylinders. Bei dieser Ausführungsform ergibt sich der Vorteil, daß die gesamte Höhe allein durch den Schnellspannzylinder bestimmt wird. Ein Abstimmen von zwei oder mehr Teilen, um eine bestimmte, genau einzuhaltende Bauhöhe zu erreichen ist nicht erforderlich.

Es ist aber allerdings selbstverständlich möglich, diesen Flansch des Schnellspannzylinders wegzulassen, so daß sich die Gesamthöhe aus der Summe der Höhen von Schnellspannzylinder und Deckel ergibt.

Es wird bevorzugt, wenn der Schnellspannzylinder als Guß- oder Schmiedeteil hergestellt wird. Hierdurch sinken die Produktionskosten. Für den Einsatz werden dann nur die Flächen bearbeitet, bei denen Genauigkeit gefordert ist; die anderen Flächen bleiben unbearbeitet. Insbesondere die kreisbogenförmigen Ausnehmungen und Einstiche in dem Befestigungsmittel können so vorgefertigt werden. Eine weitere Bearbeitung ist hier nicht erforderlich, kann aber im Einzelfall vorgenommen werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Dabei zeigt:
- Figur 1:: einen Querschnitt durch eine erste Ausführungsform mit hochgezogenem Flansch am Schnellspannzylinder;
- Figur 2:: eine Ansicht durch die Ausführungsform nach Figur 1 ohne hochgezogenen Flansch;
- Fig. 3, 4:: Ansichten gemäß den Figuren 1 und 2 in einer zweiten Ausführungsform;
- Fig. 5, 6:: Ansichten gemäß den Figuren 1 und 2 in einer dritten Ausführungsform,
- Fig. 7, 8:: Draufsichten auf einen Schnellspannzylinder nach den Figuren 2, 4 bzw. 6 in zwei Ausführungsformen.

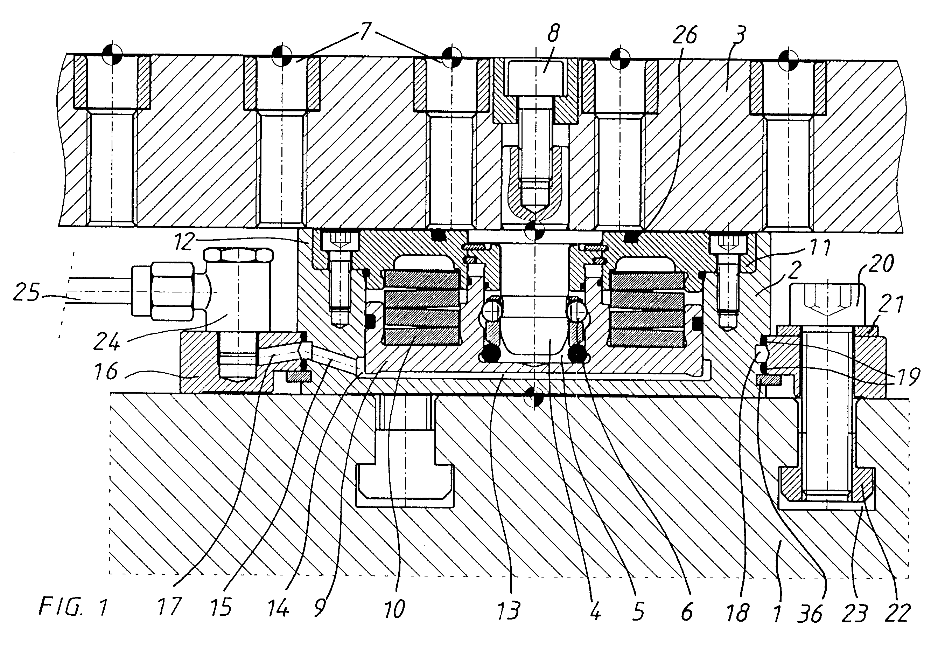

In der folgenden Beschreibung werden für gleiche oder ähnliche Bauteile auch gleiche Bezugszeichen verwendet. Eine Beschreibung gleicher oder identischer Bauteile erfolgt nur einmal anhand von Figur 1, für die weiteren Figuren wird auf diese Beschreibung verwiesen.

Figur 1 zeigt einen Querschnitt durch einen erfindungsgemäßen Schnellspannzylinder in einer ersten Ausführungsform. Auf einem Tisch 1 ist ein Schnellspannzylinder 2 befestigt, auf dem eine Palette 3 ruht. Die Palette 3 ist mit einem Nippel 4 versehen, der in eine Aufnahme 5 des Schnellspannzylinders 2 greift und dort von einem Kugelkäfig 6 gehalten ist. Die Palette 3 ist weiter mit Positionierbohrungen 7 versehen, wobei der Nippel 4 über eine Schraube 8 gehalten ist.

Der Nippel 4 wird in dem Schnellspannzylinder 2 zentriert, so daß die seitliche Lage des Nippels 4 und damit auch der Palette 3 sowie der Positionierbohrung 7 gegenüber dem Schnellspannzylinder 2 und damit gegenüber dem Tisch 1 exakt feststeht und hochgenau reproduzierbar ist. Die vertikale Lage wird durch die Höhe des Schnellspannzylinders 2 bestimmt.

Der Schnellspannzylinder 2 ist mit einem Kolben 9 versehen, der in Figur 1 über Federn 10 nach unten gedrückt wird. Die Federn 10 stützen sich an einem Deckel 11 ab, der den Schnellspannzylinder 2 nach oben verschließt.

Im gezeigten Ausführungsbeispiel ist der Deckel 11 von einem Flansch 12 des Schnellspannzylinders 2 umgeben, der leicht über dem Deckel 11 hervorsteht. Die vertikale Lage wird somit durch die Gesamthöhe des Schnellspannzylinders festgelegt.

Unterhalb des Kolbens 9 ist ein Druckraum 13 vorgesehen, der mit einer umlaufenden Ringnut 14 an der Innenseite des Schnellspannzylinders 2 versehen ist. Dieser Druckraum 13 wird zum Lösen mit einer Druckflüssigkeit beaufschlagt, die über eine Bohrung 15 in den Schnellspannzylinder 2 und eine Bohrung 17 in einer Bride 16 eingebracht wird. Die Bride 16 wird über einen Anschluß 24 nach vorn eines T-Stückes oder L-Stückes und einer Leitung 25 eingebracht.

Sowohl der Schnellspannzylinder 2 als auch die Bride 16 sind im wesentlichen rund ausgebildet. Die Winkellage zwischen diesen Bauteilen kann sich somit verändern. Um sicherzustellen, daß ein zuverlässiges Einbringen der Druckflüssigkeit von der Leitung 25 in den Druckraum 13 erfolgt, sind der Schnellspannzylinder 2 sowie die Bride 16 an der Außen- bzw. Innenseite mit einer umlaufenden Ringnut 18 versehen. Diese Ringnut ist über geeignete Dichtungen 19 abgedichtet.

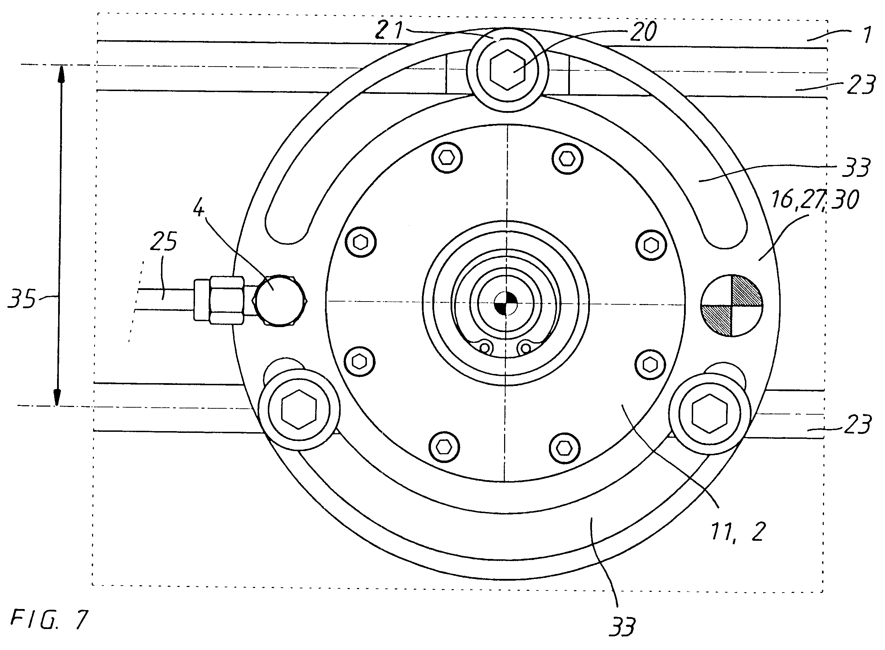

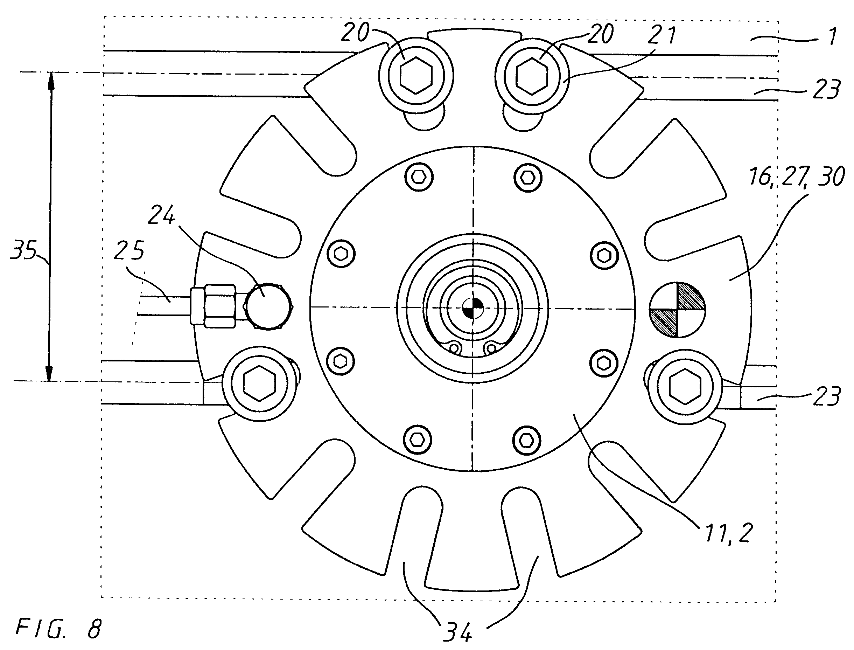

Die Befestigung des Schnellspannzylinders 2 über die Bride 16 an den Tisch 1 erfolgt mittels Schrauben 20, die mit einer Unterlegscheibe versehen sind und entsprechend der Ausnehmungen 33 oder Einstiche 34 (vergleiche Figuren 7, 8) der Bride 16 durchgreifen. Diese Schrauben 20 greifen in einem Kopf 22, der in einer T-Nut 23 des Tisches 1 aufgenommen ist.

Die Bride 16 legt sich hierbei in die in Figur 1 gezeigten Ausführungsbeispiele an einem Ring 36 an, der in einer Nut des Schnellspannzylinders 2 aufgenommen ist.

Das Einspannen geschieht dadurch, daß der Nippel 4 in die Aufnahme 5 des Schnellspannzylinders 2 eingesetzt wird. Anschließend wird die Leitung 25 freigegeben, so daß die Federn 10 den Kolben 9 in Figur 1 nach unten drücken. Die Druckflüssigkeit wird hierbei aus dem Druckraum 13 über die Bohrungen 15, 17 und die Leitung 25 abgeleitet. Der Kugelkäfig 6 wird ebenfalls ein Stück nach unten geschoben, wobei sich gleichzeitig die einzelnen Kugeln radial nach innen bewegen. Diese Kugeln legen sich dann in einer Hinterschneidung des Einzugsnippels 4 an und ergreifen diesen, so daß der Nippel 4 nach unten eingezogen und dabei gleichzeitig zentriert wird. Zum Lösen wird Druckflüssigkeit über die Leitung 25 und die Bohrungen 17, 15 in den Druckraum 13 eingebracht, so daß der Kolben 9 angehoben wird. Die Kugeln des Kugelkäfigs 6 können sich dann radial nach auswärts in eine Nut des Hydraulikzylinders 10 bewegen, so daß der Nippel 4 frei wird und die gesamte Palette 3, gegebenenfalls mit darauf befestigten Werkstücken oder Sondervorrichtungen, abgehoben werden kann.

Der Deckel 11 kann mit einem O-Ring versehen sein, der sowohl Dicht- als auch Dämpfungsfunktion übernimmt.

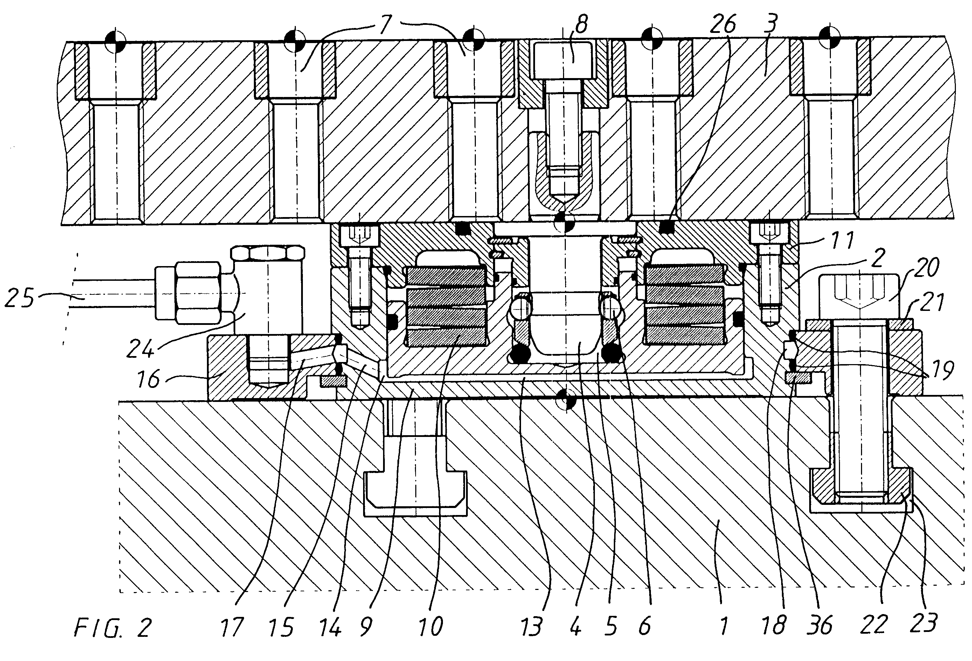

In der Ausführungsform gemäß Figur 2 ist der Schnellspannzylinder 2 an seiner Oberseite im wesentlichen glatt ausgebildet, so daß der Flansch 12 entfällt. Die Gesamthöhe wird somit durch die Summe der Höhen von Schnellspannzylinder 2 und Deckel 11 festgelegt.

Es ist in den Figuren 1 und 2 nicht zwingend erforderlich, daß die Bohrungen 15, 17 in einem bestimmten Winkel zueinander stehen. Allerdings muß wegen des Sicherungsrings 36 ein bestimmter Abstand der Ringnut 18 zu diesem Ring 36 vorgesehen sein, so daß sich insgesamt in einem stumpfen Winkel zueinanderstehende Bohrungen 15, 17 ergeben.

Der Anschluß 24 kann als T-Stück oder als L-Stück ausgebildet sein. Die Verwendung eines T-Stücks empfiehlt sich, wenn mehrere Schnellspannzylinder 2 unmittelbar miteinander gekoppelt werden sollen.

Die Gesamthöhe von Bride 16 und Anschluß 24 ist hierbei geringer als die Gesamthöhe von Schnellspannzylinder 2 und Deckel 11, so daß die Palette 3 nicht auf den Anschluß 24 aufsitzt.

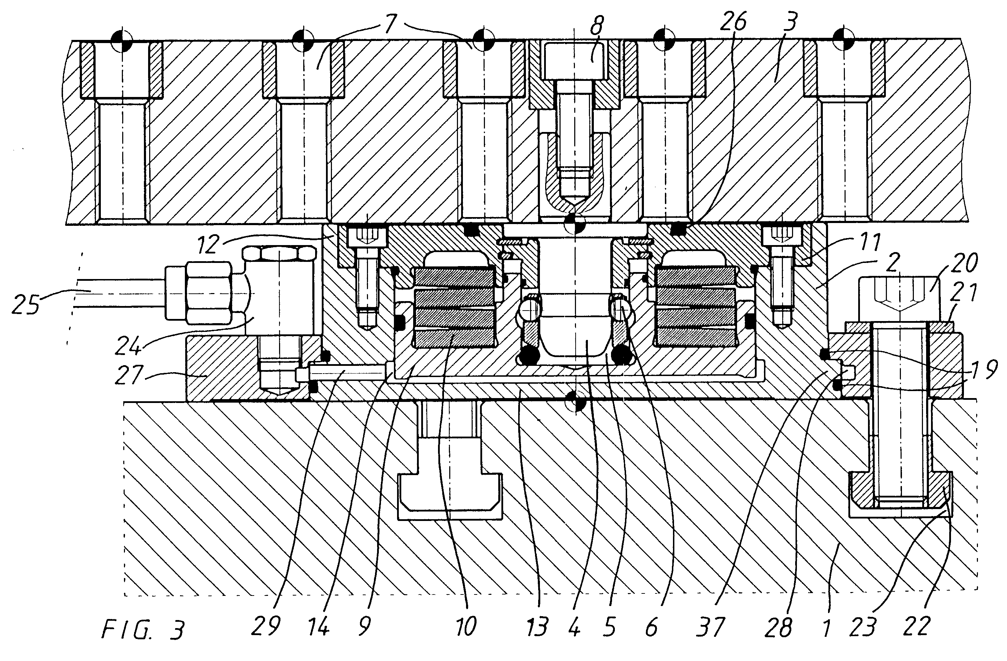

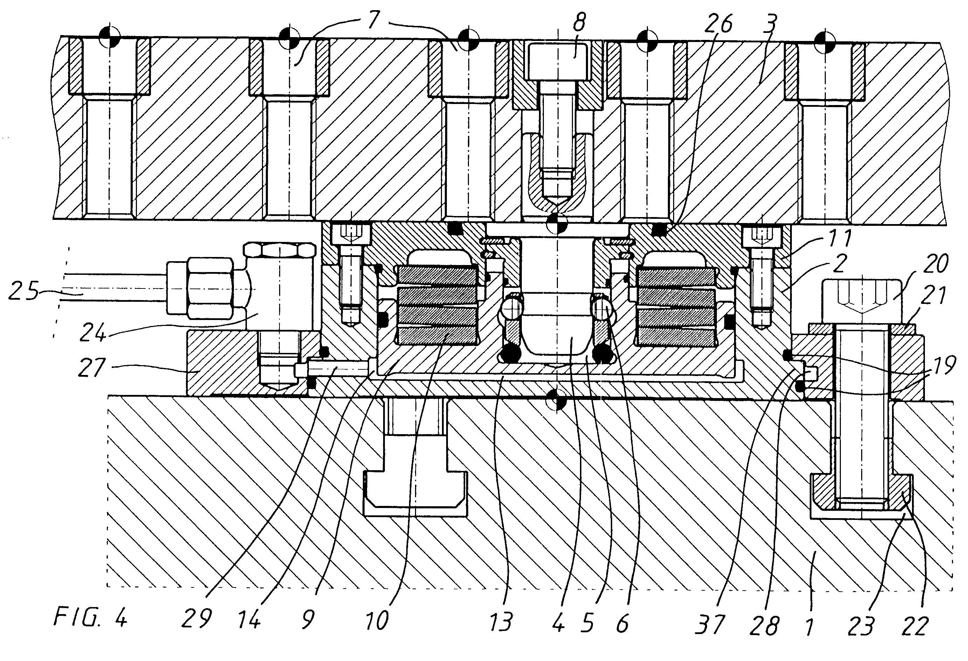

In der Ausführungsform gemäß den Figuren 3 und 4 wird eine andere Bride 27 verwendet, die über einen Ansatz 37 auf den Schnellspannzylinder 2 drückt. Die Bride 27 ist wiederum an ihrer Innenseite mit einer umlaufenden Ringnut 28 versehen, die wiederum über Dichtungen 19 abgedichtet ist. Die in den Figuren 1 und 2 dargestellte Ringnut 18 an der Außenseite des Schnellspannzylinders 2 kann entfallen.

Die Ringnut 28 ist so tief ausgebildet, daß die Bohrung des Anschlusses 24 direkt mit ihr in Verbindung steht und keine zusätzliche Bohrung erforderlich ist.

Der Schnellspannzylinder 2 ist mit einer Bohrung 29 versehen, die im wesentlichen horizontal läuft. Die Bohrung wird von außen her über die Ringnut 28 der Bride 27 versorgt und mündet wiederum in eine Ringnut 14 an der Innenseite des Schnellspannzylinders.

Wie in den Figuren 1 und 2 kann der Schnellspannzylinder mit einem Flansch 12 versehen sein (Figur 3); dieser Flansch kann aber auch entfallen (Figur 4).

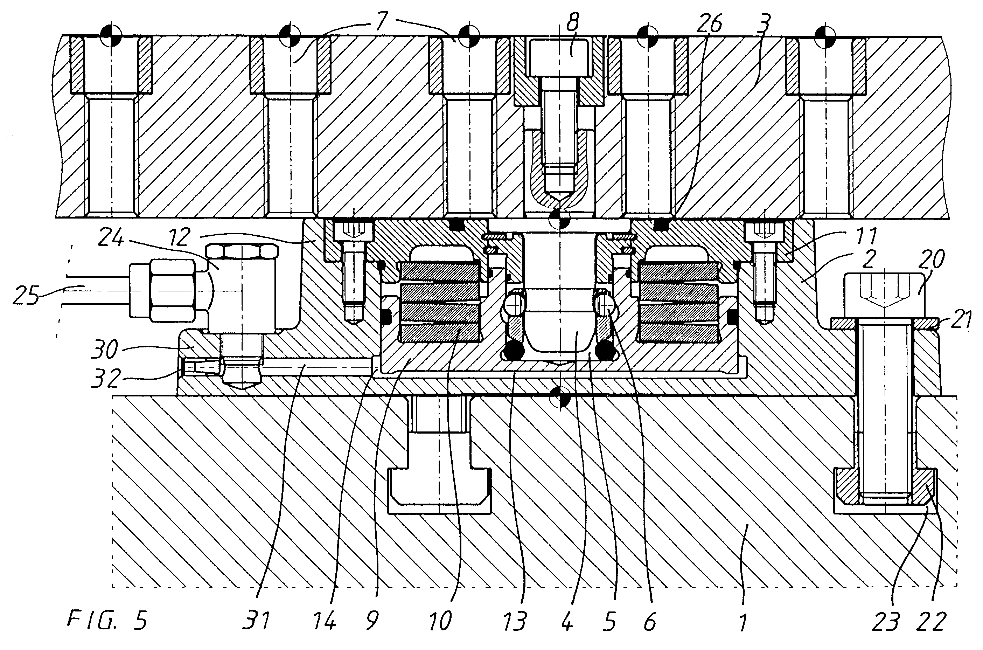

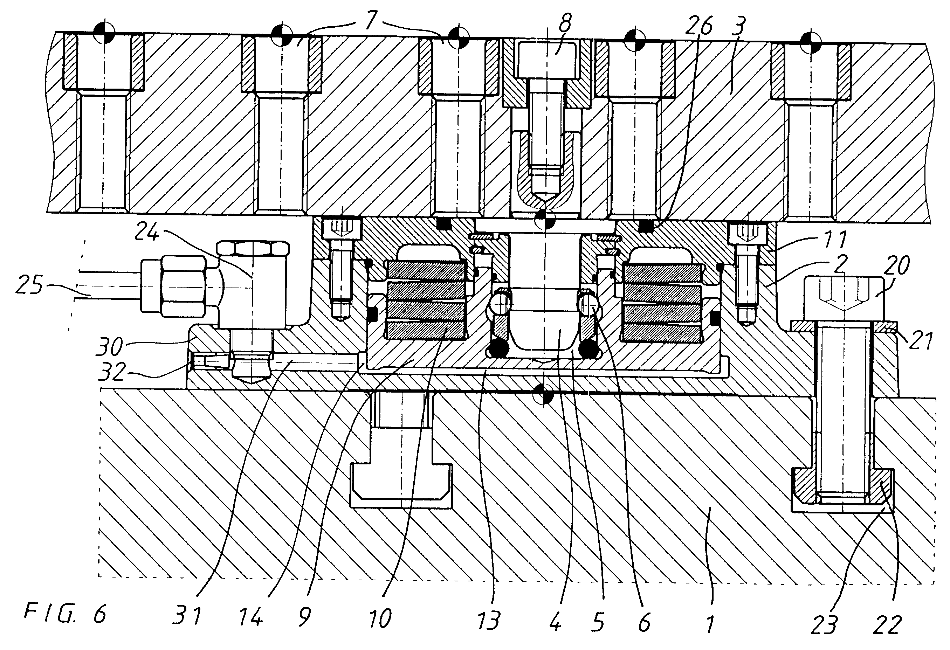

Die Figuren 5 und 6 zeigen eine dritte Ausführungsform. Figur 5 zeigt wiederum einen Schnellspannzylinder 2 mit dem Flansch 12 wie in den Figuren 1 und 3, während in Figur 6 dieser Flansch 12 entfällt.

In den Figuren 5 und 6 ist als Befestigungsmittel ein Flansch 30 vorgesehen, der materialeinstückig mit dem Schnellspannzylinder 2 verbunden ist. Die Zuführung der Drückflüssigkeit zum Druckraum 13 erfolgt über eine Bohrung 31, die an der Außenseite des Flansches 30 über einen Stopfen 32 verschlossen ist.

Vorteilhaft bei dieser Ausführungsform nach den Figuren 5 und 6 ist, daß die Dichtungen zwischen dem Befestigungsmittel und dem Schnellspannzylinder entfallen können. Der Schnellspannzylinder 2 kann darüber hinaus als Gußteil hergestellt werden, wie z. B. an den Formschrägen erkennbar ist. Eine Bearbeitung erfolgt lediglich im Bereich der Berührflächen.

Um die insgesamt zu bearbeitende Fläche möglichst gering zu halten, ist bei sämtlichen Ausführungsformen vorgesehen, den Schnellspannzylinder 2 an seiner Unterseite etwa in der Mitte mit einer Absenkung zu versehen. Diese Absenkung ist als dicke, schwarze Linie in Figuren 1 bis 6 dargestellt.

In den Figuren 7 und 8 sind Draufsichten auf Schnellspannzylinder nach den Figuren 2, 4 und 6 dargestellt. Dies ist daran erkennbar, daß der Flansch 12 nicht dargestellt ist. Die Befestigung für einen derartigen Schnellspannzylinder mit Rand 12 erfolgt aber in ähnlicher Weise.

Jedes Befestigungsmittel 16, 27, 30 kann entweder mit etwa kreisbogenförmigen Ausnehmungen 33 (Figur 7) oder aber mit mehreren Einstichen 34 (Figur 8) versehen sein. Obwohl nur ein einziger Anschluß 24 dargestellt ist, können selbstverständlich auch mehrere dieser Anschlüsse, z. B. an gegenüberliegenden Stellen des Befestigungsmittels 16, 27, 30, vorgesehen sein.

Wie bereits in der Beschreibungseinleitung ausgeführt, werden die Ausnehmungen 33 und Einstiche 34 bereits bei der Herstellung in einem Guß- oder Schmiedeverfahren eingebracht. Eine gesonderte Nachbearbeitung ist nicht erforderlich. Es müssen nur die Anlage- und Berührflächen an der Ober- und Unterseite des Befestigungsmittels 16, 27, 30 nachbearbeitet werden.

Bei der Befestigung des Schnellspannzylinders 2 ist darauf zu achten, daß dieser mit drei Schrauben 20 befestigt werden soll. Diese Schrauben 20 sollen, wenn möglich, gleichmäßig angeordnet sein, also etwa einen Winkel von 120° zueinander aufweisen. Je nach dem Abstand 35 zwischen den T-Nuten 23 müssen somit unterschiedliche Schnellspannzylinder oder unterschiedliche Befestigungsmittel 16, 27, 30 verwendet werden.

Insgesamt ergibt sich mit der vorliegenden Erfindung eine sehr viel einfachere und kostengünstigere Konstruktion als bei bisher bekannten Schnellspannzylindern.

### Zeichnungslegende

- 1.: Tisch
- 2.: Schnellspannzylinder
- 3.: Palette
- 4.: Nippel
- 5.: Aufnahme
- 6.: Kugelkäfig
- 7.: Positionierbohrung
- 8.: Schraube
- 9.: Kolben
- 10.: Feder
- 11.: Deckel
- 12.: Flansch
- 13.: Druckraum
- 14.: Ringnut
- 15.: Bohrung
- 16.: Bride
- 17.: Bohrung
- 18.: Ringnut
- 19.: Dichtung
- 20.: Schraube
- 21.: Unterlegscheibe
- 22.: Kopf
- 23.: T-Nut
- 24.: T-Stück/L-Stück
- 25.: Zuleitung
- 26.: O-Ring
- 27.: Bride
- 28.: Ringnut
- 29.: Bohrung
- 30.: Flansch
- 31.: Bohrung
- 32.: Stopfen
- 33.: Ausnehmung
- 34.: Einstich
- 35.: Abstand
- 36.: Ring
- 37.: Ansatz

## Patentansprüche

1. Schnellspannzylinder zum Einziehen und Zentrieren eines Einzugsnippels, wobei in dem Schnellspannzylinder ein Kolben verschieblich gelagert ist, der zum Einziehen mit Federkraft und zum Lösen mit einer Druckflüssigkeit beaufschlagbar ist, **dadurch gekennzeichnet**, daß die Zuführung der Druckflüssigkeit durch das Befestigungsmittel (16, 27, 30) des Schnellspannzylinders (2) erfolgt.

2. Schnellspannzylinder nach Anspruch 1, **dadurch gekennzeichnet**, daß das Befestigungsmittel (16, 27) als von dem Schnellspannzylinder (2) getrenntes Bauteil ausgebildet ist.

3. Schnellspannzylinder nach Anspruch 2, **dadurch gekennzeichnet**, daß der Schnellspannzylinder (2) an seiner Außenseite mit einer umlaufenden Ringnut (18) versehen ist.

4. Schnellspannzylinder nach Anspruch 2 oder 3, **dadurch gekennzeichnet**, daß das Befestigungsmittel (16, 27) an seiner Innenseite mit einer umlaufenden Ringnut (28) versehen ist.

5. Schnellspannzylinder nach Anspruch 4, **dadurch gekennzeichnet**, daß die Ringnut (28) eine derartige Tiefe aufweist, daß mit einer Bohrung zur Aufnahme eines Anschlusses (24) für die Zuführung der Druckflüssigkeit in Verbindung steht.

6. Schnellspannzylinder nach einem der Ansprüche 3 bis 5, **dadurch gekennzeichnet**, daß die Ringnuten (18, 28) mit Dichtungen (19) versehen sind.

7. Schnellspannzylinder nach einem der Ansprüche 2 bis 6, **dadurch gekennzeichnet**, daß mindestens eine Verbindungsbohrung (15, 17; 29) zum Zuführen der Druckflüssigkeit in einen Druckraum (13) des Schnellspannzylinders (2) vorgesehen ist, die in eine umlaufende Ringnut (14) an der Innenseite des Schnellspannzylinders (2) mündet.

8. Schnellspannzylinder nach Anspruch 7, **dadurch gekennzeichnet**, daß die Verbindungsbohrung (15, 17) zweigeteilt ist und eine erste Bohrung (15) in dem Schnellspannzylinder (2) und eine zweite Bohrung (17) in dem Befestigungsmittel (16) vorgesehen ist.

9. Schnellspannzylinder nach Anspruch 8, **dadurch gekennzeichnet**, daß die beiden Bohrungen (15, 17) einen stumpfen Winkel einschließen.

10. Schnellspannzylinder nach Anspruch 7, **dadurch gekennzeichnet**, daß nur eine Verbindungsbohrung (29) vorgesehen ist, die vollständig in dem Schnellspannzylinder (2) angeordnet ist.

11. Schnellspannzylinder nach einem der Ansprüche 2 bis 10, **dadurch gekennzeichnet**, daß der Schnellspannzylinder (2) an seiner Außenseite mit einem Anschlag (36, 37) für das Befestigungsmittel (16, 27) versehen ist.

12. Schnellspannzylinder nach Anspruch 11, **dadurch gekennzeichnet**, daß der Anschlag als Ring (36) oder als Ansatz (37) ausgebildet ist.

13. Schnellspannzylinder nach Anspruch 1, **dadurch gekennzeichnet**, daß das Befestigungsmittel (30) materialeinstückig mit dem Schnellspannzylinder (2) ausgebildet ist.

14. Schnellspannzylinder nach einem der Ansprüche 1 bis 13, **dadurch gekennzeichnet**, daß das Befestigungsmittel (16, 27, 30) mit kreisbogenförmigen Ausnehmungen (33) versehen ist.

15. Schnellspannzylinder nach einem der Ansprüche 1 bis 14, **dadurch gekennzeichnet**, daß das Befestigungsmittel (16, 27, 30) mit Einstichen (34) versehen ist.

16. Schnellspannzylinder nach einem der Ansprüche 1 bis 15, **dadurch gekennzeichnet**, daß der Schnellspannzylinder (2) mit einem Deckel (11) versehen ist, der außenseitig von einem Flansch (12) umgeben ist, der leicht über den Deckel (11) vorsteht.

17. Schnellspannzylinder nach einem der Ansprüche 1 bis 16, **dadurch gekennzeichnet**, daß der Schnellspannzylinder (2) ein Guß- oder Schmiedeteil ist.
